# EUROPEAN PATENT APPLICATION

(11) **EP 0 860 113 A1**
(43) Date of publication of application: **26.08.1998**
(21) Application number: 97301047.3
(22) Date of filing: 19.02.1997
(51) Int. Cl.: A01K 97/06, A01K 97/22, A01K 97/10

(54) **Fishing kit**

(71) Applicant: Spring Subglow Industrial Co., Ltd., Min Hsiung Hsiang, Chia Yi City (TW)
(72) Inventor: Chiu, Chun-Mu, Chia Yi City (TW)
(74) Representative: Woodward, John Calvin

(57) **Abstract**

A composite fishing kit with a partitioned tray (10) for holding various items of fishing tackle, a foldable chair (2) which is adjustable to different heights and has an adjustable bar (23) on which an umbrella (4) can be mounted and a storage bag (3) for holding the tray (10) and the folded chair (2) therein. The tray (10) also has rod support racks (15,16) for holding the fishing rods and the entire fishing kit may be packed into a small size to facilitate carrying or storing it in the bag (3).

## Description

This invention relates to a composite fishing kit and more particularly to a multifunction kit which is versatile and compact in size.

Fishing is a very popular outdoor leisure activity. To fully enjoy it, a fisherman needs a lot of special equipment such as hooks, bait, chair, umbrella, tools, etc. which are all different sizes and shapes. They also need to be easy to pack for carrying and easy to unpack for use. This can be a rather burdensome chore so not doing it properly or carefully can easily spoil the fun of fishing.

In view of aforesaid problem, it is an object of this invention to provide a composite fishing kit which can contain a lot of different fishing tackle and tools neatly so that a fisherman can readily carry whatever is needed. It is also an object of the invention that the kit can also be packed in a small size to facilitate carrying, transportation and storage.

It is a still further object of the invention to provide a fishing kit which includes rod and umbrella support means which will enable the fisherman to relax conformably while fishing and provide the fisherman with a shelter from sunshine or rain.

At its broadest, the invention provides a fishing kit comprising:
a) a partitioned box with a cover thereon;
b) a first rod rack on one end of the box which is adjustable for height and inclination relative thereto and a second rod rack on the opposite end of the box, both said first and second rod racks having rod receiving means thereon;
c) a foldable chair with means thereon for holding an umbrella and adjusting its position relative to the chair; and
d) a storage container for the box and chair.

According to a preferred embodiment, there is provided a fishing kit comprising a partitioned tray providing a plurality of separate spaces for containing fishing tackle and/or tools, a movable cover hinged at one end with a movable lid, a pair of spaced front rod racks located at one end of the tray engageable with a first rod rack, and a second rod rack located at another end of the tray, the movable cover being engageable with a latch located at one end of the tray, the movable lid being engageable with a slot located at the other end of the tray, the first rod rack being movable up or down or tiltable at a desired angle by means of an adjustable nut located on the front rod racks, the first rod racks and the second rod rack have respectively a plurality of rod supporting slots formed thereon, and a foldable chair including a seat having front supporting means thereunder engageable with a leg on the seat to position it at a low level and a rear supporting means located engageable with said leg to position it at a high level, and a seat back having a laterally movable adjustable bar thereon, one end of which is engageable with a connector engageable with a tube for holding an umbrella tiltable at various angles and a storing bag having an extension for holding the fishing kit, the foldable chair and tube therein.

A preferred embodiment of the invention will now be described, by way of example only, with reference to the accompanying drawings in which:
Figure 1 is an exploded view of a fishing kit of the invention;
Figure 2 is a perspective view of the fishing kit shown in Figure 1;
Figure 3 is a perspective view of a foldable chair which forms a part of the present invention;
Figure 4 is a view of a storage container or bag which forms a part of the present invention;
Figure 5 is a perspective view of the storage bag of Figure 4 and resting means which forms a part of the present invention;
Figure 6 is a perspective view of the fishing kit of the invention in its folded state; and
Figure 7 is a view of the fishing kit of the invention after packing in its storage bag.

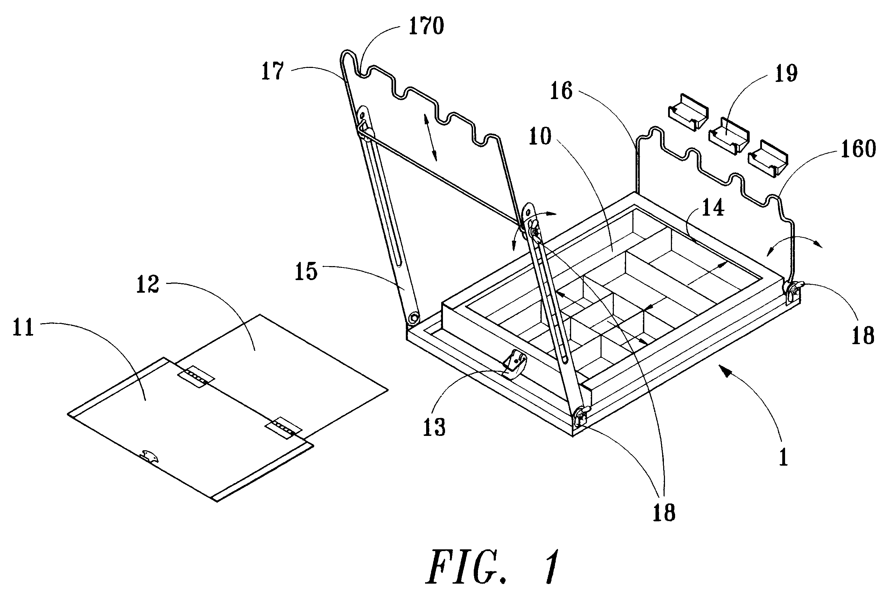

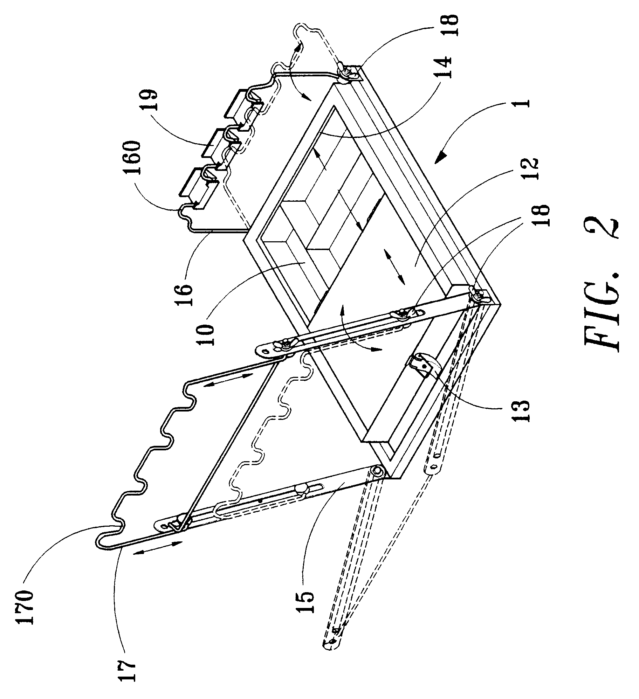

Referring to Figures 1 and 2, there is shown a fishing kit 1 of this invention which includes a partitioned tray 10 having a plurality of separate spaces to contain different types of fishing tackle and tools. Above the tray 10, there is a movable cover 11 which has a hinged lid 12. The tray 10 has a latch 13 at one end and a slot 14 at its other end in which the lid 12 may be wedged. The cover 11 is engageable with the latch 13 to form a fully covered container in which all the fishing tackle and tools are kept for carrying or storage. In use, the lid 12 may be folded over the cover 11 thereby allowing the cover 11 to be moved backwards and forwards to expose the tackle or tools in the partitioned tray 10. A pair of spaced front rod racks 15 are provided at one end of the tray 10, each rack having a slot therein and a butterfly nut 18 engageable with a first rod rack 17 provided with a plurality of recesses 170 to enable fishing rods to rest therein. Each butterfly nut 18 allows the first rod rack 17 to be moved up or down, or tilted to a desired angle.

At the opposite end of the tray 10, there is a second rod rack 16 which also has a plurality of recesses 160 for supporting a fishing rod therein. Another butterfly nut 18 is disposed at one end of the second rod rack 16 to enable it to be tilted to any desired angle. The second rod rack 16 is also adapted to receive a plurality of rod retaining blocks 19 therein which can hold and secure one end of the fishing rods thus leaving the fisherman's hands free to do other things. The retaining blocks 19 are movable and can be removed when not in use.

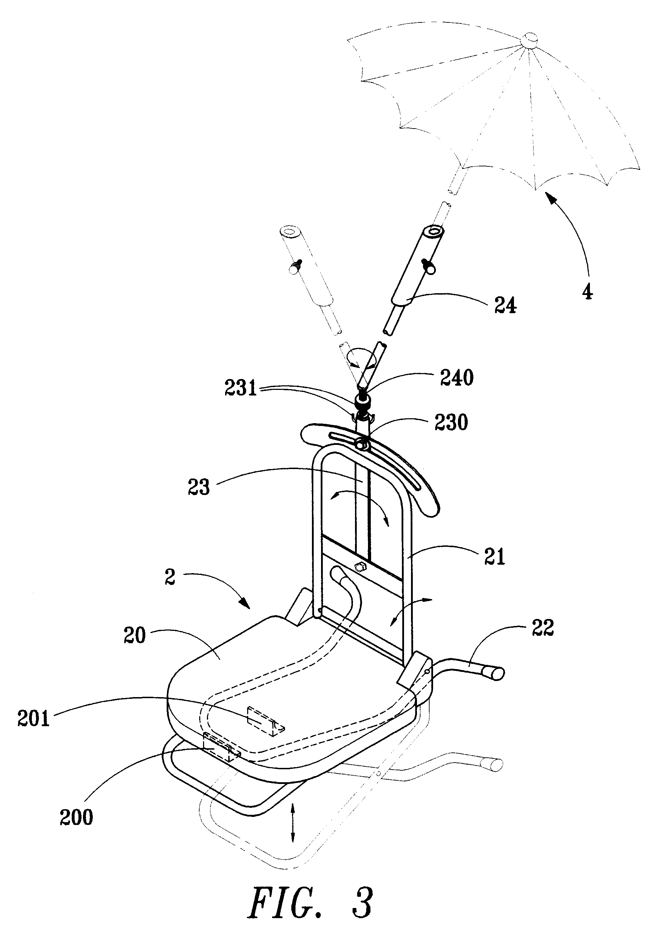

Referring to Figure 3 there is shown a foldable chair 2 which forms a part of this invention and includes a seat 20 and a seat back 21. A leg 22 is located below the seat 20 and is engageable with a front supporting block 200 for a low position, or a rear supporting block 201 for a high position.

On the seat back 21, there is an adjustable bar 23 which may be moved to the left or right in the slot by means of an adjusting nut 230. Hooks 231 are provided at one end of the adjusting bar 23 for hanging a water bottle or other articles thereon. The adjusting bar 23 can also support a connector 240 which is engageable with a tube 24 for holding an umbrella 4. The connector 240 may be tilted to any angle desired. With the illustrated arrangement, a fisherman may sit on the chair 2 under the umbrella 4 and be sheltered from the sun or rain.

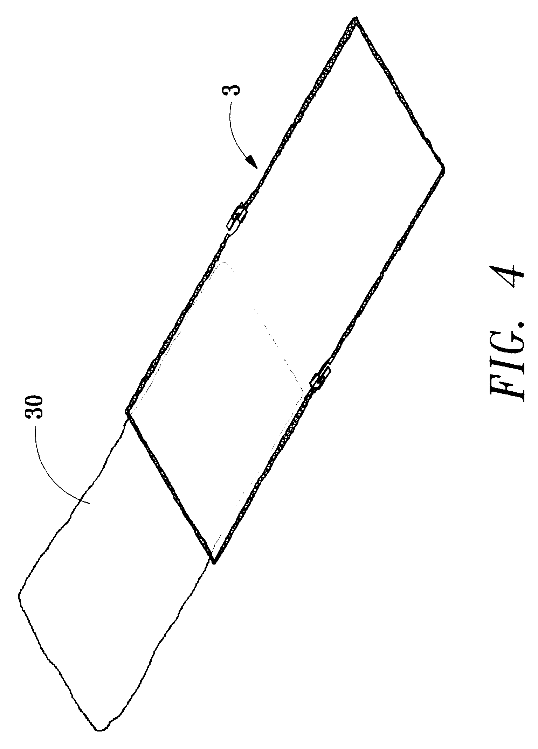

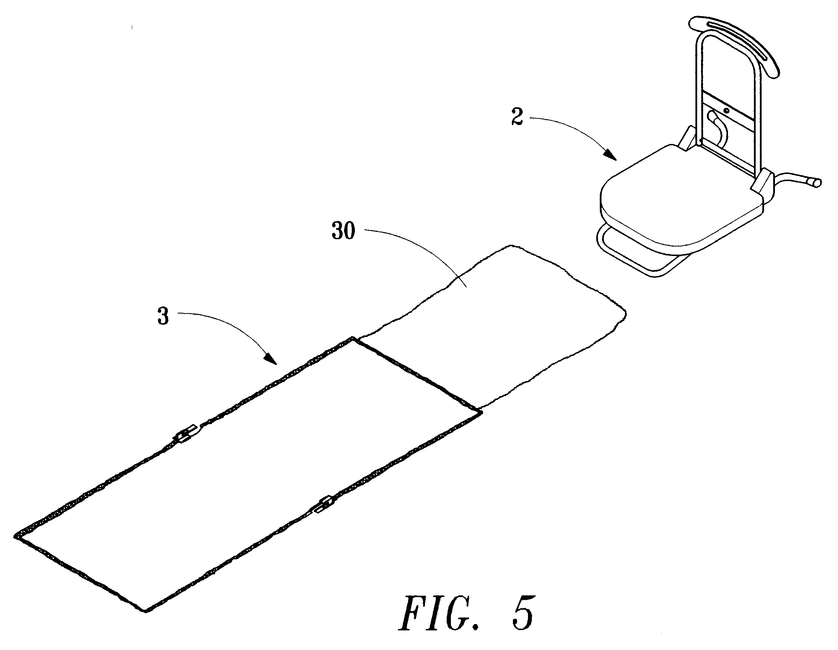

Figure 4 shows a storage container or bag 3 for holding the fishing kit 1, the chair 2 and the tube 24. It also has an extension 30 which can be modified so that when the bag 3 is spread on the floor, it becomes a mattress allowing the fisherman to lie on it and use the chair 2 as a pillow (see Figure 5).

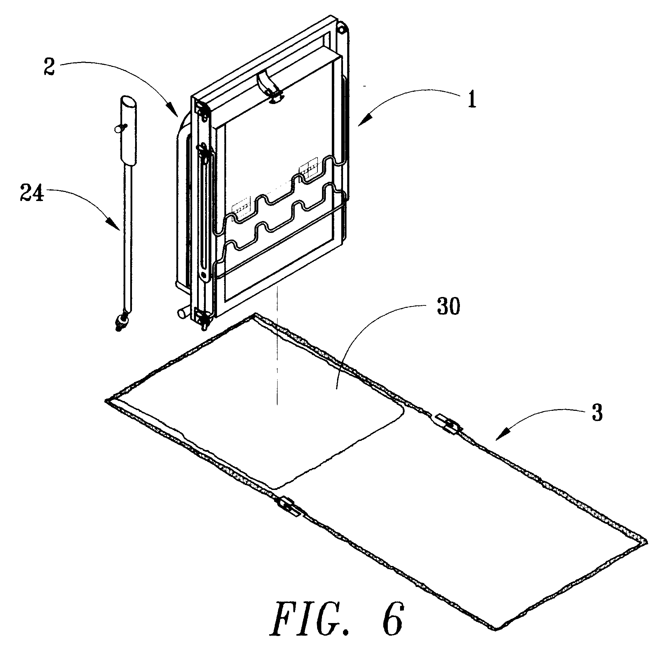

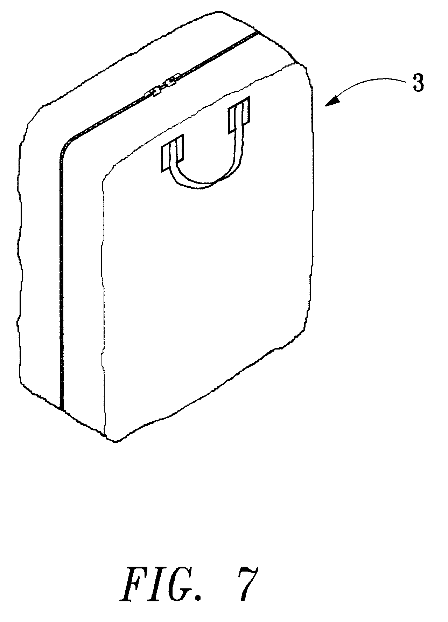

Referring to Figures 6 and 7, when the fishing kit 1 and the chair 2 are folded and packed, they are contained within the storage bag 3 in a compact size so it is easy to carry and store.

## Claims

1. A fishing kit characterised by:
a) a partitioned box (10) with a cover (11,12) thereon;
b) a first rod rack (17) on one end of the box which is adjustable for height and inclination relative thereto and a second rod rack (16) on the opposite end of the box, both said first and second rod racks having rod receiving means thereon;
c) A foldable chair (12) with means (240) thereon for holding an umbrella (4) and adjusting its position relative to the chair; and
d) a storage container (3) for the box (10) and chair (2).

2. A fishing kit as claimed in claim 1 characterised in that the cover (11) is movable and has a hinged lid (12) at one end thereof.

3. A fishing kit as claimed in claim 2 characterised the movable cover (11) is engageable with a latch (13) located at one end of the box, the movable lid being engageable with a slot (14) located at another end of the box.

4. A fishing kit as claimed in any preceding claim characterised in that the first rod rack (17) is adjustable to a desired angle by means of an adjustable nut (18) located on a pair of spaced front rod racks (15).

5. A fishing kit as claimed in any preceding claim characterised in that the foldable chair (2) includes a seat (20) having a front supporting block located thereunder engageable with a leg to position the seat at a low level and a rear supporting block (200) located thereunder engageable with the leg (22) to position the seat at a high level, the seat having a back (21) with an adjustable bar (23) movable laterally relative thereto, the adjustable bar (23) having a connector (231) at one end thereof engageable with means for holding an umbrella (4) tiltable at various angles.

6. A fishing kit as claimed in any preceding claim further characterised by rod retaining means (19) engageable with the second rod rack (16) for holding one end of a fishing rod.

7. A fishing kit as claimed in claim 5 characterised in that the adjustable bar (23) has a hook (231) located thereon.

8. A fishing kit as claimed in claim 5 characterised by additional supporting blocks located under the foldable seat (20) engageable with the leg (22) for positioning the seat at various heights.
